# Europäisches Patentamt
# European Patent Office
# Office européen des brevets

(11) Veröffentlichungsnummer: **0 116 943**
A2

(12) **EUROPÄISCHE PATENTANMELDUNG**

(21) Anmeldenummer: **84101518.3**

(22) Anmeldetag: **14.02.84**

(51) Int. Cl.³: **G 06 K 1/12**

(30) Priorität: **19.02.83 DE 3305842**

(43) Veröffentlichungstag der Anmeldung:
**29.08.84** Patentblatt **84/35**

(84) Benannte Vertragsstaaten:
**DE FR GB IT NL SE**

(71) Anmelder: **MAATSCHAPPIJ VAN BERKEL'S PATENT N.V.**
**P.O. Box 6018 Keileweg 5**
**NL-3029 BR Rotterdam(NL)**

(72) Erfinder: **Leepel, Christian**
**Bolhruid 17**
**NL-3068 DJ Rotterdam(NL)**

(74) Vertreter: **Ludewig, Karlheinrich, Dipl.-Ing. et al,**
**Patentanwälte Dipl.-Phys. Buse Dipl.-Phys. Mentzel**
**Dipl.-Ing. Ludewig Unterdörnen 112**
**D-5600 Wuppertal 2(DE)**

(54) **Vorrichtung im Matrix-Drucker für Warenbons, insbesondere Waage mit Bonausgabe.**

(57) Bei einer Vorrichtung mit Matrix-Drucker für Waren-Daten, wie Art, Menge und/oder Preis einer Ware, ist der Druckkopf mit punktartigen Elementen versehen, an denen ein den Bon bildender Aufzeichnungsträger schrittweise vorbeibewegt wird. Die Elemente sind durch eine Steuereinrichtung gegen dem Aufzeichnungsträger selektiv aktivierbar und stellen die Waren-Daten in Form eines maschinenlesbaren Strichcodes aus strichförmigen Aufzeichnungsspuren mit definierter Streifenbreite sowie Streifenabstandsweite dar. Um Fehler in der Aufzeichnung durch defekte Elemente auszuschließen, wird vorgeschlagen, in einer außerhalb des Schriftfeldes liegenden Zone sämtliche Elemente ansteuerbar zu machen, zur Darstellung eines quer zum Steifenverlauf im Barcode liegenden Testbalkens, worin gestörte Elemente durch eine leere Linie erkennbar sind.

FIG.6

0116943

PATENTANWÄLTE

IPL.-PHYS. BUSE · DIPL.-PHYS. MENTZEL · DIPL.-ING. LUDEWIG

iterdörnen 114 · Postfach 200210 · 5600 Wuppertal 2 · Fernruf (0202) 55 70 22/23/24 · Telex 8 591 606 wpat

5600 Wuppertal 2, den 18.2.1983

56

Kennwort: "Punktchecklinie"
Fall 288"

Firma Maatschappij van Berkel's Patent N.V.
Keileweg 5, Rotterdam / Niederlande

Vorrichtung im Matrix-Drucker für Warenbons,
insbesondere Waage mit Bonausgabe

Die Erfindung bezieht sich auf eine Vorichtung mit Matrix-Drucker für Waren-Daten, wie Art, Menge und/oder Preis einer Ware, auf einem der Ware zugeordneten Bon, insbesondere eine Waage mit Bonausgabe. Dieser Bon kann zur preislichen, gewichtsmäßigen oder sortenweisen Auszeichnung einer Ware dienen und daher unmittelbar mit der Ware bzw. deren Verpackung durch Kleben, Heften od.dgl., verbunden sein. Ein solcher Bon kann aber auch lose der Ware beigelegt werden, so daß der Verkäufer diesen Bon an der Kasse beim Bezahlen des Preises vorweisen und die Ware in Empfang nehmen kann .

Zur Darstellung der Waren-Daten hat sich ein Matrix-Drucker bewährt, der mit einer Schar von aufzeichnungsaktiven, in Abstand zueinander angeordneten, punktartigen Elementen ausgerüstet ist. An diesem Druckkopf wird ein Aufzeichnungsträger entlangbewegt, von dem ein Abschnitt den späteren Bon bildet. Von einer Steuereinrichtung werden nun die Elemente entsprechend den aufzuzeichnenden Daten selektiv angesteuert, wodurch die darzustellenden Symbole punktweise auf dem Aufzeichnungsträger dargestellt werden. Es ist vorgeschlagen worden, (DE-OS 30 21 854) mit diesen punktartigen Elementen die Daten nicht nur in Form alpha-numerischer Symbole, sondern auch in Form eines maschinenlesbaren Strichcodes aus streifenförmigen Aufzeichnungsspuren darzustellen. Bei einem solchen Strichcode sind die Symbole durch definierte Streifenbreiten sowie dazwischenliegende Leerabstände bestimmter Weite festgelegt.

Es kommt in der Praxis vor, daß durch Verschmutzung oder Defekt ein Element des Druckkopfes nicht mehr einwandfrei wirksam ist. Ein solcher Fehler läßt sich nicht ohne weiteres rechtzeitig feststellen. Bei elektrisch aktivierbaren Elementen, die auf thermisch ansprechbare Aufzeichnungsträger wirken, können Kontrollmessungen nur mit niedrigen Spannungen ausgeführt werden, die manchmal keinen Fehler erkennen lassen, weil diese erst bei voller Bestriebspannung am gestörten Element auftritt. Wegen der Kleinheit des aufzeichnungswirksamen Punkts eines solchen Elementes ist dieser Fehler bei der Aufzeichnung der Daten nicht ohne weiteres zu erkennen. Visuell fällt dieser Fehler in keinem Fall bei Darstellung des Strichcodes auf. Das maschinelle Ablesen eines solchen fehlerhaften Strichcodes hat aber schwerwiegende Folgen. In manchen Fällen wird die Vorrichtung einen solchen Strichcode nicht ablesen können oder, falls der Fehler zufällig mit einem tatsächlichen Strichcode übereinstimmen sollte, falsch wiedergeben. Das Feststellen eines solchen Defekts würde umständliche Kontrolleinrichtungen und zeitaufwendige Kontrollverfahren erfordern. Dabei ist es schwierig zu ermitteln, welche der zahlreichen punktartigen Elemente bei der Aufzeichnung versagt haben.

Der Erfindung liegt die Aufgabe zugrunde, eine preiswerte Vorrichtung der gattungsgemäßen Art zu entwickeln, die fehlerhaft aufzeichnungswirksame Elemente auf einfache und zuverlässige Weise festzustellen und zu identifizieren gestattet.

Dies wird erfindungsgemäß dadurch erreicht, daß in einer außerhalb des Schriftfelds liegenden Zone des Aufzeichnungsträgers sämtliche Elemente ansteuerbar sind, zur Darstellung eines quer zum Streifenverlauf im Barcode liegenden Testbalkens, worin gestörte Elemente durch einen den Testbalken durchquerende leere Linie erkennbar und i-dentifizierbar sind.

Es genügt das Aufdrucken eines solchen Testbalkens, um visuell sofort anhand der leeren Linie feststellen zu können, welches der zahlreichen Elemente nicht mehr einwandfrei wirksam ist. Die Reparatur kann dann an defekten Elementen gezielt ausgeführt oder der Druckkopf ausgetauscht werden. Die Herstellung eines solchen Testbalkens ist insbesondere bei Vorrichtungen vorteilhaft, die einen bezüglich des Aufzeichnungsträgers ruhenden Druckkopf aufweisen und dessen Element-Schar über die verfügbare Beschriftungsbreite des Aufzeichnungsträgers verteilt angeordnet ist. Zum Aufzeichnen des Testbalkens brauchen sämtliche Elemente nur aktiviert und dabei der Aufzeichnungsträger ein kurzes Teilstück weiterbewegt zu werden, das der gewünschten Balkenhöhe des Testbalkens entspricht. Diese Elemente sind im Druckkopf so in seitlichem Versatz zueinander angeordnet, daß sie bei der Aktivierung die jeweils aufgrund ihrer Abstandslage entstehenden Lücken gegenseitig ausfüllen. Es entsteht ein schwarzes Feld, wo fehlerhafte Elemente deutlich sichtbare,durchlaufende,leere Striche erzeugen.

Die Erfindung ist aber auch auf Vorrichtungen anwendbar, bei denen der Druckkopf in Zeilenverlaufsrichtung bezüglich des Aufzeichnungsträgers beweglich ist. Der Druckkopf umfaßt dabei nur eine geringe Anzahl von Elementen, die während ihrer zeilenförmigen Bewegung nacheinander die jeweils gewünschten Bereiche des Aufzeichnungsträgers überstreichen und dabei durch selektive Ansteuerung ihrer Elemente die Daten punktweise aufdrucken. Die Erfindung ermöglicht, mit diesen Druckköpfen auch die Aufzeichnung von Strichcodierungen, weil der Druckkopf bei der zeilenweisen Bewegung und möglichst auch der Aufzeichnungsträger bei seinem Transport um etwa einen halben Abstand der Nadeln bewegt werden, so daß die aufgebrachten Druckpunkte "auf Lücke" zueinander liegen und dadurch ein einwandfreies dunkles Feld erzeugen, das maschinenlesbare, dunkle Streifen definierter Breite mit scharfen Kanten entstehen läßt.

Die Erfindung erfordert keinen besonderen Aufwand, weil das Aufdrucken eines solchen Testbalkens während der Pausen zwischen den Aufzeichnungen der Warendaten erfolgen kann. Der Nutzbetrieb der Vorrichtung für das Aufzeichnen der Daten ist dadurch nicht beeinträchtigt, denn der Testbalken wird während der ohnehin für die Aufzeichnung der Daten nutzlosen Wartezeiten aufgebracht. Zweckmäßigerweise druckt die Vorrichtung den Testbalken automatisch in bestimmter zeitlicher Folge oder in bestimmten Längenabständen im Vorschub des Aufzeichnungsträgers.

Da ein solcher Testbalken als grafisches Element zur Ausgestaltung des Waren-Bons gut genutzt werden kann, um z.B. bestimmte Angaben auf dem Bon zu unterstreichen, stellt er kein störendes Element im erzeugten Bild des Bons dar. Um etwaige Fehler sofort feststellen zu können, empfiehlt es sich, den Testbalken auf jedem einzelnen, einen Bon bildenden Abschnitt des Aufzeichnungsträgers aufzubringen.

Am besten ist es, einen solchen Testbalken jeweils unmittelbar vor oder nach dem Aufzeichnen des maschinenlesbaren Strichcodes auszuführen.

In den Zeichnungen ist die Erfindung in mehreren Ausführungsbeispielen dargestellt. Es zeigen:

Fig. 1    eine nach der Erfindung gestaltete Waage mit Bonausgabe,

Fig. 2    eine Schnittansicht durch den Drucker der Waage von Fig. 1,

Fig. 3 in starker Vergrößerung die Detailansicht eines wichtigen Bestandteilsdes Druckers von Fig. 2,

Fig. 4    in ähnlicher vergrößerter Darstellung die mit dem Bauteil des Druckers erzeugte Strichcodierung von zwei Ziffern in einem maschinenlesbaren Code,

Fig. 5    in ähnlicher Vergrößerung das Beispiel einer alpha-numerischen Schreibweise mit diesem Drucker,

Fig. 6 und 7 in vergrößerter Darstellung einen mit der erfindungsgemäßen Vorrichtung erzeugten Bon, der im Fall der Fig. 6 mit einem defekten Drucker und im Fall der Fig. 7 mit einem einwandfreien Drucker erstellt worden ist,

Fig. 8    in schematischer Seitenansicht den Bestandteil eines anderen Druckers, der bei der Erfindung anwendbar ist,

Fig. 9 in Vergrößerung die schematische Draufsicht auf die Arbeitsstelle einer Ausführungsform des Druckers nach der Type von Fig. 8,

Fig. 10 ein Teilstück eines Bons, der mit dem Drucker gemäß Fig. 9 hergestellt worden ist,

Fig. 11 in Vergrößerung die schematische Draufsicht auf die Arbeitsstelle einer weiteren Ausführungsform des Druckers gemäß der Bautype von Fig. 8 und

Fig. 12 die Darstellung eines mit dem Drucker von Fig. 11 erzeugten Bons.

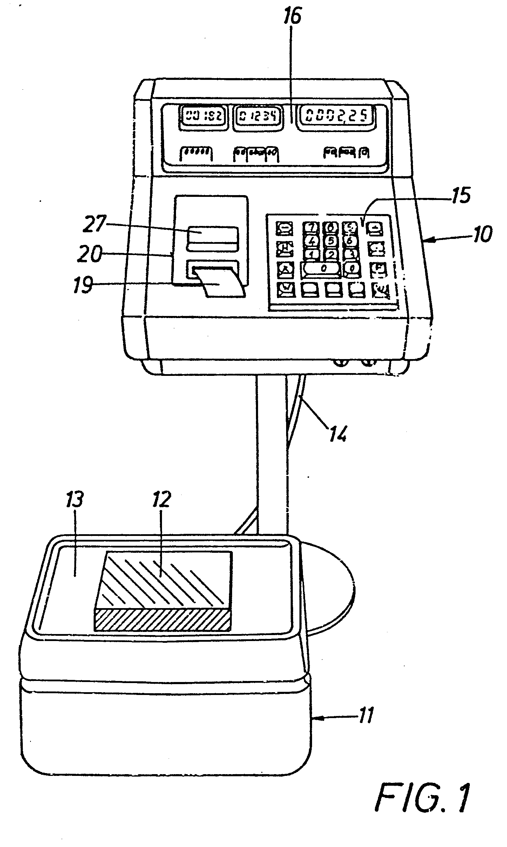

Gemäß Fig. 1 ist die erfindungsgemäße Vorrichtung bei einer preisrechnenden Waage verwirklicht. Diese besteht aus einem Lastaufnahmeteil 11 und aus einem Auswerteteil 10, die zwar zu einem kompakten Gerät zusammengefaßt sein könnten, aber im vorliegenden Fall voneinander trennbar sind und über eine elektrische Verbindungsleitung 14 zusammenhängen. Der Lastaufnahmeteil 11 besitzt eine Lastplatte 13, auf welcher die gewichtsmäßig zu bestimmende Ware 12 aufgelegt wird, und im Inneren eine Gewichtsmessdose beliebiger, bekannter Art, welche über die Verbindungsleitung 14 ihre Messimpulse an den Auswerteteil 10 abgibt.

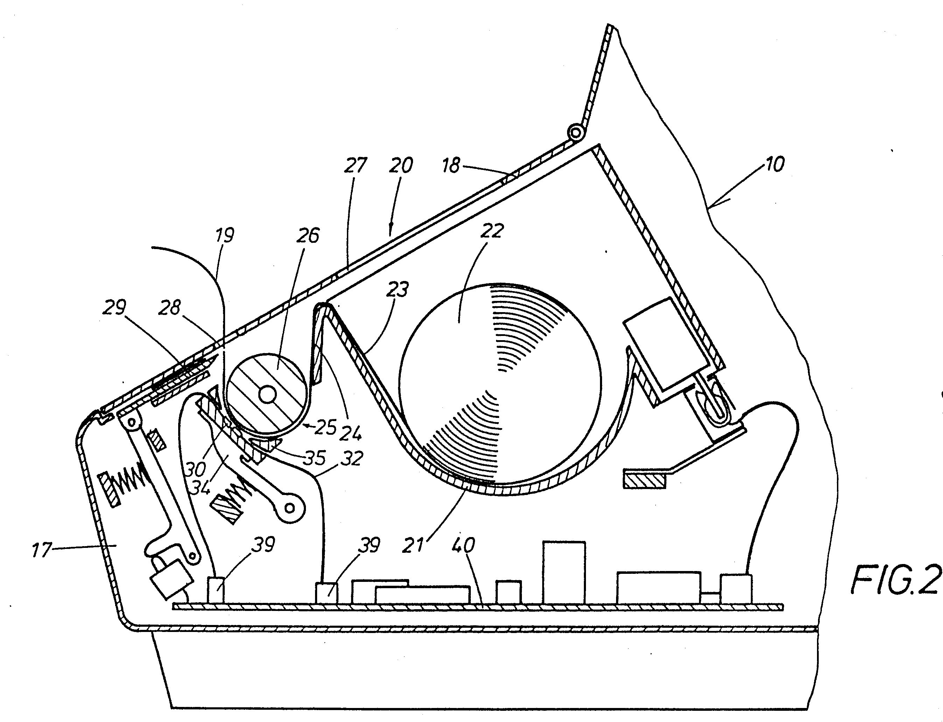

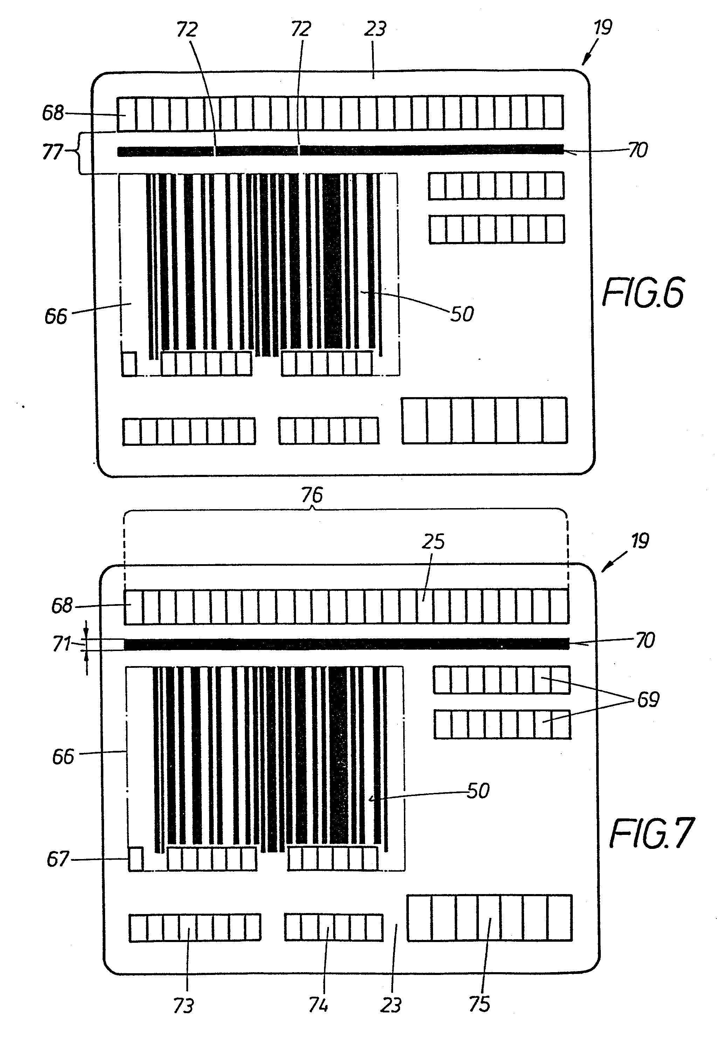

Im Auswerteteil 10 befindet sich eine Eingabeeinrichtung 15, die es gestattet, Angaben über Art, Menge oder Preis der betreffenden Ware 12 dem Gerät mitzuteilen, worauf das ermittelte Gewicht, der Einheitspreis der Ware, z.B. der Preis pro Kilogramm der Ware, und der individuelle gewichtsbezogene Warenpreis in einer Anzeigeeinrichtung 16 dargestellt werden. Der Auswerteteil 10 umfaßt ferner einen Matrix-Drucker 20, der auf einem Warenbon 19, der beispielsweise in Fig. 7 gezeigt ist, Daten auf zweierlei Weise aufzeichnet. Der grundsätzliche Aufbau eines solchen Matrix-Druckers ist aus Fig. 2 erkennbar.

Die Bauteile des Druckers 20 sind in einem, von einer Klappe 18 abschließbaren Gehäuse 17 des Auswerteteiles 10 angeordnet. Stattdessen könnte der Drucker auch in einem vom Auswerteteil 10 gesonderten Gehäuse untergebracht sein. Im GEhäuse 17 befindet sich eine Lagerschale 21, welche den Wickel 22 einer thermisch beschriftbaren Papierbahn 23 aufnimmt, die hier als Aufzeichnungsträger für den Drucker verwendet wird. Die Papierbahn 23 wird über Leitflächen 24 dem eigentlichen Druckkopf 25 zugeführt. Durch ein Sichtfenster 27 in der Klappe kann der Papiervorrat auf dem Wickel 22 beobachtet werden. Der eigentliche Druckkopf 25 umfaßt eine Transportwalze 26, um welche die Papierbahn 23 herumgeführt ist und diese definiert weiterbewegt. Das Ende der bedruckten Papierbahn 23 tritt durch eine Öffnung 28 nach außen. Der herausgetretene Endabschnitt wird von der Hand erfaßt und gegen ein Schneid-messer 29 im Öffnungsbereich geführt, wo der Endabschnitt abgetrennt wird und als Bon zur Kennzeichnung der behandelten Ware 12 verwendbar ist.

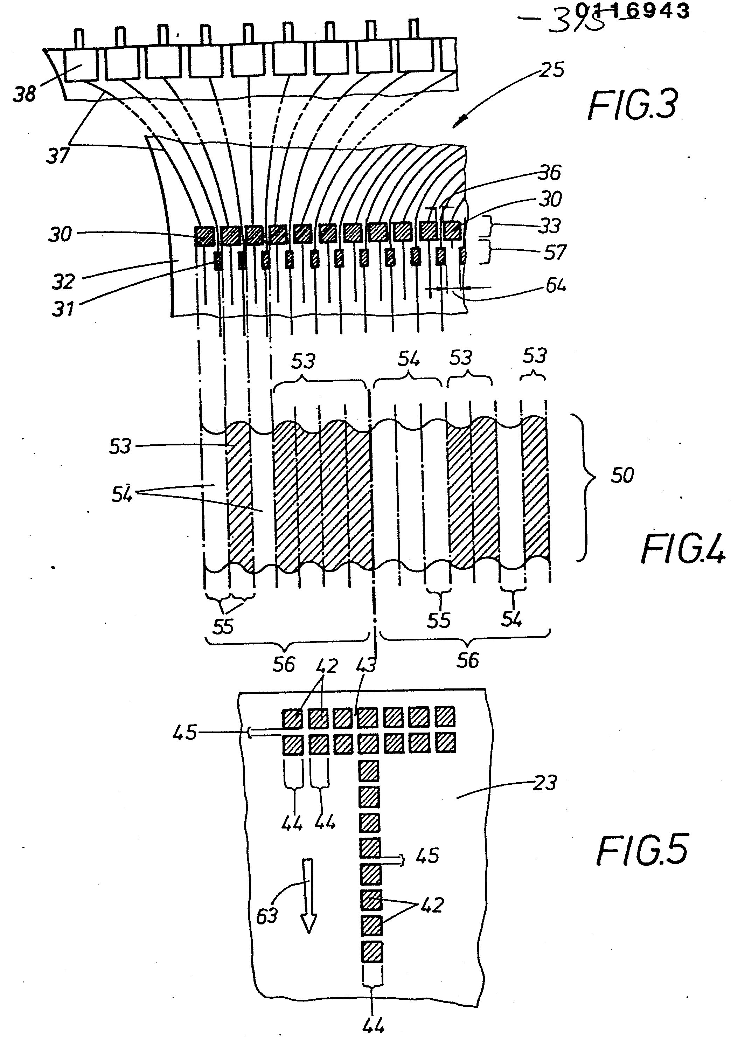

Der Drucker umfaßt eine flexible Platte 32, mit, wie Fig. 3 zeigt, zueinander gestaffelt angeordneten punktartigen Elementen 30, 31, die hier in zwei Reihen 33, 57 angeordnet sind. Diese Element-Reihen 33, 57 erstrecken sich über die gesamte, aus Fig. 7 ersichtliche, Schreibbreite 76 der Papierbahn bzw. des von ihr gebildeten Bons 19. Die Elemente 30, 31 der flexiblen Platte 32, werden, wie aus Fig. 2 ersichtlich ist, von einem federbelasteten Druckglied 34 im Druckkopf 25 gegen die um die Transportwalze 26 herumgelegte Papierbahn angedrückt, wozu Leitglieder 35 mitwirken. Zur gegenseitigen thermischen und elektrischen Isolierung sind die Elemente 30, 31 in seitlichem Abstand 36, 64 zueinander angeordnet. Die aufzeichnungswirksamen Querschnitte der Elemente 30, 31 sind in Fig. 3 schraffiert dargestellt und mit elektrischen Leitungen 37 verbunden, die zu Kontaktgliedern 38 am Plattenrand führen und welche von einer im Auswertegerät 10 befindlichen Steuereinrichtung elektrisch aktivierbar sind, gemäß den ermittelten oder über die Eingabeeinrichtung 15 eingeführten Waren-Daten. Die vorerwähnten Querschnitte und die Lage der Elemente 30, 31 sind so zueinander bemessen, daß sie die durch die vorerwähnten Abstände 36, 64 erzeugten Lücken gegenseitig schließen. Die Kontaktglieder 38 sind mit Gegenkontaktgliedern 39 in Eingriff, die an einer Leiterplatte 40 sitzen, welche Bestandteile der elektrischen Steuereinrichtung trägt.

Wenn mit dem Drucker die Aufzeichnung alpha-numerischer Daten erwünscht ist, so werden im vorliegenden Fall lediglich die Elemente 30 angesteuert, wodurch beispielsweise der aus Fig. 5 ersichtliche Buchstabe "T" entstehen kann. In zwei Vorschub-Schritten der Papierbahn 23 werden zunächst eine Schar nebeneinander liegender Elemente 30 angesteuert, wodurch die Punkte 42 entstehen, zwischen denen die aus den vorerwähnten Abständen 36 resultierenden Lücken 43 verbleiben. Zwischen den beiden vorerwähnten Arbeitsschritten ist der Vorschub 63 der Papierbahn 23 so gewählt, daß zwischen ihnen der aus Fig. 5 ersichtliche freie Spalt 45 verbleibt. Durch zusätzliche Aktivierung der Elemente zwischen den beiden Schritten oder durch einen langsameren Transport 63 der Bahn könnte dieser Spalt 45 natürlich auch zum Verschwinden gebracht werden. Damit ist der T-Balken entstanden. Für die Erzeugung des T-Stegs wird in entsprechender Weise verfahren, indem jetzt nur ein einzelnes Element 30 mehrfach in vielen Teilschritten aktiviert wird und die Aufzeichnungsspur 44 entsteht.

Der gleiche Druckkopf 25 ist aber auch dazu geeignet, die aus Fig. 4 ersichtliche Strichcodierung 50 eines maschinell lesbaren Bar-Codes darzustellen, wozu jetzt die Elemente 30 und 31 verwendet werden. Die Strichcodierung 50 ist durch eine unterschiedliche Anordnung und Breite von dunklen Streifen 53 und hellen Streifen 54 erzeugt. Für die Darstellung einer bestimmten Ziffer dient ein Charakterfeld 56, das im vorliegenden Fall, wie Fig. 4 zeigt, aus sieben Modulbahnen 55 zusammengesetzt ist. Durch die wahlweise helle oder dunkle Ausbildung der einzelnen Modulbahnen 55 ergibt sich die eine bestimmte Ziffer darstellende Strichcodierung 50, wofür im vorliegenden Fall im linken Feld die Ziffer "6" und im rechten Feld 56 der Fig. 4 die Ziffer "0" dargestellt werden soll.

Im vorliegenden Fall sind der vorerwähnte seitliche Versatz und die Querschnittbemessung der punktartigen Elemente 30, 31 so ausgebildet, daß innerhalb einer Modulbahn 55 jeweils ein Elementen-Paar 30, 31 angeordnet ist, wie durch die strichpunktierten Hilfslinien zwischen Fig. 3 und 4 zu erkennen ist. Soll die betreffende Modulbahn 55 zur Erzeugung eines hellen Streifens 54 beitragen, so arbeitet dieses Elementen-Paar 30, 31 nicht. Umgekehrt, wenn ein dunkler Streifen 53 bei einer Modulbahn 55 erzeugt werden soll, ist das zugehörige Elementenpaar 30,31 wirksam zu setzen. Während dieser Wirksamkeit bzw. Unwirksamkeit entsprechend der gewünschten Strichcodierung 50 wird der Aufzeichnungsträger 23 dem erwähnten Vorschub 53 unterzogen. Wie schon vorstehend bei Fig. 5 erläutert wurde, erfolgt die Ansteuerung der Elemente in bezug auf diesen Vorschub 63 so, daß jetzt die in Fig. 5 noch erwähnten freien Spalte 45 wegfallen und ein durchgehender dunkler Strich 53 in Richtung des Vorschubs 63 entsteht. Durch die Querschnittsbemessung der Punkte 30, 31 und ihrer aus Fig. 3 ersichtliche versetzte Anordnung werden die in Fig. 5 erwähnten Lücken 43 von dem jeweils zugehörigen Element 31 dieses Elementen-Paares abgedeckt. so daß die in Fig. 5 noch vereinzelten Aufzeichnungsspuren 44 durch die dazwischenliegende Wirksamkeit der anderen Elemente 31 verschmelzen und den durchgehenden dunklen Streifen 53 in einer Modulbahn 55 bilden.

Im Falle der Fig. 7 ist der schematische Aufbau eines Waren-Bons 19 gezeigt, der aus einem Abschnitt der vorerwähnten Papierbahn 23 gebildet ist, die an dem vorbeschriebenen Druckkopf 25 aufzeichnungswirksam vorbeigeführt worden ist. Es versteht sich, daß die Aufteilung des Aufzeichnungsfelds beliebig sein kann. Grundsätzlich sind an diesem Bon 19 die durch Kästchen 25 angedeuteten Stellen zum Aufdrucken von alpha-numerischen Daten vorgesehen. In einem durch strichpunktierte Linien auf dem Bon 19 umgrenzten Feld 66 werden Daten der jeweiligen Waren durch eine maschinenlesbare Strichcodierung 50 dargestellt. Es handelt sich hier um einen verschlüsselten Code einer Zahl, die im unteren Bereich des Feldes 66 in einer visuell lesbaren Zeile 67 erscheint. Mit dem Druckkopf 25 des Matrix-Druckers ließen sich auch etwaige grafische oder bildliche Darstellungen auf dem Bon 19 abdrucken, was nicht näher gezeigt ist.

Der dargestellte Bon 19 umfaßt im Kopf ein Feld 68 zur Warenangabe, woraus ersichtlich ist, welche verpackte Ware mit diesem Bon 19 gekennzeichnet wird. Weiterhin sind auf dem Bon 19 zwei Datumsangaben 69 vorgesehen, die z.B. das Verpackungsdatum der Ware und ihre Haltbarkeit angeben. Schließlich trägt der Bon 19 noch numerische Angaben über das individuelle Gewicht der Ware bei 73, den Einheitspreis der Ware, z.B. der Preis für ein Kilogramm der Ware, bei 74 und den individuellen Endpreis der betreffenden Ware an der mit 75 gekennzeichneten Stelle.

Dieser Bon 19 ist erfindungsgemäß mit einem besonderen Testbalken 70 versehen, der im vorliegenden Fall zugleich als grafisches Element der Unterstreichung unter die an den Stellen 25 des Feldes 68 erscheinende Warenangabe gesetzt wird. Der Testbalken 70 erstreckt sich über die gesamte zu beschriftende Breite 76 der den Bon 19 bildenden Papierbahn 23. Der Testbalken 70 entsteht dadurch, daß sämtliche aufzeichnungswirksamen Elemente, die in Fig. 3 mit 30, 31 bezeichnet sind, während einer Vorschubstrecke 71 dieser Papierbahn 23 wirksam sind, wodurch die aus Fig. 7 ersichtliche Balkenhöhe 71 sich ergibt.

Solange alle Elemente 30, 31 einwandfrei funktionsfähig sind, erscheint ein einheitlicher, kontinuierlicher Testbalken 70 der Fig. 7. Ist aber auch nur eines der Elemente 30 oder 31 verschmutzt oder gestört, so erscheinen auf dem Testbalken 70, wie Fig. 6 verdeutlicht, ihn durchquerende leere Linien 72, die sofort erkennen lassen, daß an diesen Stellen Elemente defekt sind. An der Strichcodierung 50 der Fig. 6 ist dieser Fehler durch eine Verbreiterung der hellen Streifen mit dem menschlichen Auge kaum feststellbar. Selbst wenn ein solcher Fehler mitten durch einen dunklen Streifen hindurchgehen sollte, würde man, wenn man keinen genauen Vergleich mit einer einwandfreien Strichcodierung ausführt, meinen, es handele sich dabei um eine richtige Variante der Strichcodierung. Eine maschinelle Leseeinrichtung würde aber diesen Aufzeichnungsfehler nicht akzeptieren und überhaupt nicht oder möglicherweise sogar einen falschen Wert anzeigen. Erfolgt keine Aufzeichnung, so könnte man denken, daß die Leseeinrichtung defekt ist und würde nicht ohne weiteres vermuten, daß hier einfach ein Fehler im Leseobjekt, nämlich in der Strichcodierung 50, auf dem Bon 19 begründet liegt.

Mit der Erfindung ist der Defekt der Elemente 30 an den leeren Linien 72 im Testbalken 70 sofort erkennbar. Die Reparatur kann an der richtigen Stelle erfolgen. Für das Aufbringen des Testbalkens 70 wird der Zwischenraum 77 zwischen dem Warenangabefeld 68 und dem Feld 66 für die Strichcodierung 50 ausgenutzt. Der Testbalken 70 wird von der erfindungsgemäßen Vorrichtung selbsttätig aufgedruckt, während der Papierstreifen 23 am Druckkopf 25 mit seinem den Zwischenraum 77 umfassenden Stück vorbeibewegt wird. Diese Transportzeit wird zur Erzeugung des Testbalkens 70 ausgenutzt. Dies erfolgt bei jedem einzelnen Bon 19 dieser Papierbahn 23.

Die Erfindung ist auch bei Matrix-Druckern anderer Art verwendbar, die zur Darstellung der Daten in Form von Strichcodierungen durch punktartige Aufzeichnungselemente geeignet ist. Dazu eignen sich beispielsweise elektrostatische Drucker, die als Matrix-Elemente Elektroden aufweisen und als Aufzeichnungsträger ein Papier mit einer elektrisch leitenden Schicht verwenden. Durch Stromfluß in den Elektrodern, der durch das geerdete Papier weiterfließt, wird an der Kontaktstelle die Schicht weggebrannt.

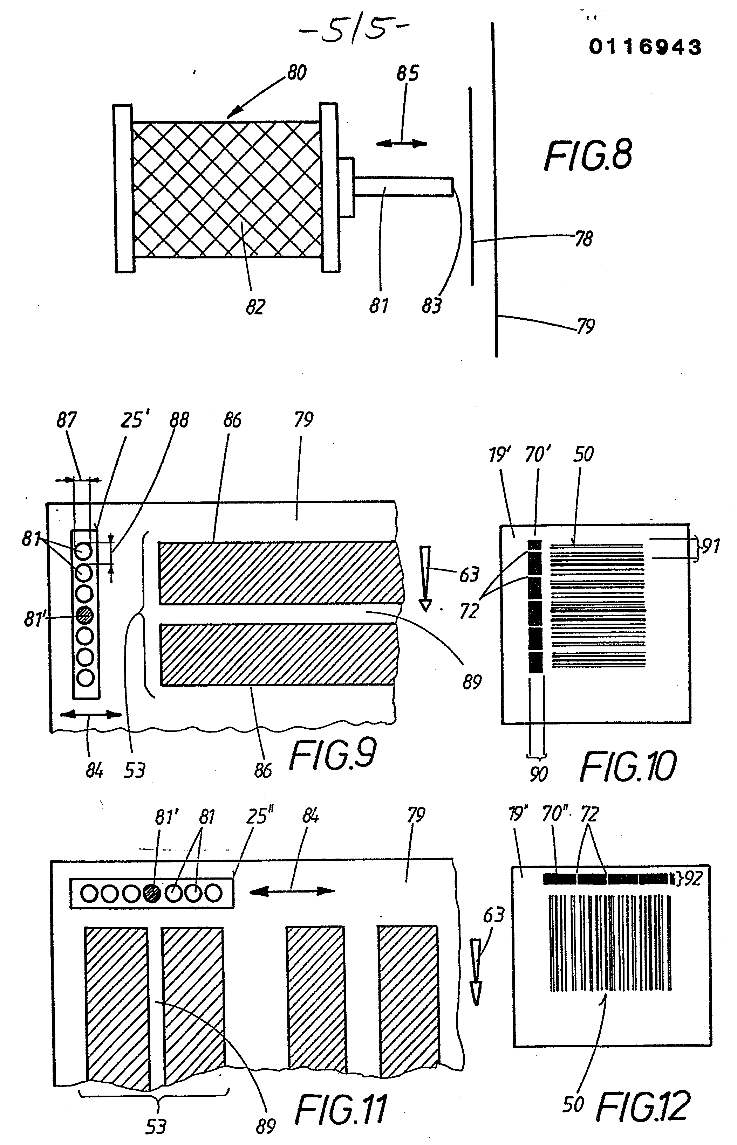

Während die bisher beschriebenen Drucker stationäre Druckköpfe aufwiesen, die nicht relativ zum Papier bewegbar waren, versteht es sich, daß die Erfindung auch bei Druckern anwendbar ist, deren Druckköpfe relativ zum Papier zu Aufzeichnungszwecken beweglich sind. Dies soll anhand der Fig. 8 bis 12 für einen Nadeldrucker erläutert werden.

In Fig. 8 ist das Bauprinzip eines Nadeldruckers 80 anhand einer seiner Nadeln 81 gezeigt, die durch Ansteuerung eines Elektromagneten 82 axial im Sinne des Pfeiles 85 bewegt werden und dabei mit ihrem Stirnende 83 gegen ein Farbband 78 bewegt, das gegen die als Aufzeichnungsträger dienende Papierbahn 79 gestoßen wird. Das Stirnende 83 druckt dadurch einen Punkt auf der Papierbahn 79 aus, und ist folglich als "punktartiges Element" im Sinne der Erfindung anzusehen.

Im Ausführungsbeispiel von Fig. 9 ist ein Querschnitt durch die Nadeln 81 eines nach diesem Bauprinzip hergestellten Druckkopfes 25' gezeigt. Es ist eine ganze Schar solcher Nadeln in linienförmiger Anordnung in dem Druckkopf 25' gesetzt. Die Linienanordnung erfolgt hier in der durch den Pfeil 63 angedeuteten Transportrichtung der in Fig. 9 erkennbaren Papierbahn 79. Der Druckknopf 25' bewegt sich quer zum Bahntransport 63 in Zeilenverlaufsrichtung, also quer über die Breite der Bahn 79, im Sinne des eingezeichneten Doppelpfeiles 84.

Zur Darstellung des Strichcodes 50 auf einem Warenbon 19' wird der Druckknopf 25' bei Stillstand der Papierbahn 79 zunächst in Zeilenverlaufsrichtung 84 bewegt, was vorteilhaft schrittweise geschieht, wobei beim Stillstand bei jedem Schritt die in Fig. 8 erwähnte Axialbewegung 85 der Nadeln 81 erfolgt. Die hellen und dunklen Streifen der Strichcodierung 50 entstehen hier in Zeilenverlaufsrichtung, quer zum Transport 63 der Bahn 79, wie aus Fig. 10 zu erkennen ist. Deshalb werden beim Schreiben einer Zeile, entsprechend der erforderlichen Streifenverteilung in dieser Zone die Nadeln 81 wirksam gesetzt. Die Nadeln werden also auf der gleichen Zeile 84 stets gleichbleibend aktiviert. Zwischen ihren einzelnen Aktivierungsschritten bewegt man den Druckknopf 25' in Zeilenverlaufsrichtung 84 möglichst nur um die halbe Querschnittsbreite 87 einer Nadel 81 oder weniger weiter, um eine scharfe Streifenkante 86 und einen satten, dunklen Streifen 53 zu erhalten. Am Ende der fertiggestellten Zeile wird die Papierbahn 79 in Transportrichtung 63 um den halben Nadelabstand 88 in Linienanordnung der Nadeln 81, oder auch weniger, weiter bewegt und dann wird im umgekehrten Richtungssinn weiter geschrieben. Die einzelnen Punkte beim Drucken werden dabei zweckmäßigerweise auf die Lücken in der vorausgegangenen Zeile geschriebenen Punkte gesetzt. Das Ergebnis ist ein beidkantig 86 ausreichend scharf begrenzter dunkler Streifen 53.

Im dargestellten Ausführungsbeispiel von Fig. 9 ist angenommen, daß eine Nadel 81' des Druckkopfs 25' nicht einwandfrei funktioniert, weshalb beim Schreiben irrtümlicherweise ein heller Streifen 89 entsteht, der visuell nicht
auffällt aber zu der bereits geschilderten, falschen
maschinellen Ablesung führt. Auch im vorliegenden Fall
wird erfindungsgemäß, wie Fig. 19 verdeutlicht, ein
Testbalken 70' neben dem Feld der Strichcodierung 50 auf
den Bon 19 gedruckt. Der Testbalken 70' verläuft in Bahntransportrichtung 63, also quer zur Längsverlaufsrichtung
der Streifen im Strichcode 50. Der Testbalken 70' entsteht
abschnittsweise 91 nacheinander in einer breitenmäßig
festgelegten Längszone 90 des Bons 19'. Beim zeilenweisen
Schreiben in dieser Längszone 90 entsteht in jedem Abschnitt 91 eine leere Linie 72, die sofort erkennen läßt,
daß an dieser Stelle eine defekte Nadel 81' wirksam ist.

Bei der in Fig. 11 gezeigten Vorrichtung wird ein Druckkopf 25'' mitNadeln 81 vorgesehen, deren linienförmige
Anordnung in Zeilenverlaufsrichtung weist, wo auch der
Druckkopf 25'' ausweislich des Bewegungspfeiles 84 quer
zur Transportrichtung 63 der Papierbahn 79 beim Drucken bewegt wird. Ausweislich der Fig. 12 entsteht hier ein
Bon 19'', wo die Streifen der Strichcodierung 50 in
Transportrichtung 63 der Papierbahn 79 weisen, also senkrecht zur Zeilenschreibeweise 84 des Druckkopfes 25'' liegen.

Dies erfordert eine besondere Steuerung des Druckkopfs 25''
beim Drucken der Streifen der Strichcodierung 50. Da bei
der zeilenweisen Bewegung des Druckkopfs nacheinander
das ganze Muster der Strichcodierung 50 aufgezeichnet wird,
müssen bei jedem Schritt andere Nadeln 81 aktiviert werden,
wie es das vorliegende Streifenmuster verlangt.

Ist hier eine Nadel,die bei 81' angedeutet ist, im
Druckkopf 25'' defekt, so entsteht eine leere Gasse 89 in
einem herzustellenden dunklen Streifen 53 an dieser und an weiteren Stellen des aufzuzeichnenden Strichcodes, die zu maschinellen Fehlablesungen führen. Um dies optisch sofort erkennen zu können, wird auf dem Bon 19'' ebenfalls ein Testbalken 70'' gedruckt, der in einer Breitenzone 92 des Bons 19'' angeordnet liegt und sich quer zum Strichverlauf der dortigen Strichcodierung 50 erstreckt. Zur Erzeugung des Testbalkens 70'' werden wieder sämtliche punktartigen Elemente, d.h. alle Nadeln 81 aktiviert. Die defekten Nadeln 81' erkennt man aus dem Testbalken 70'' anhand der leeren Linien 72, die - wegen der mehrfach nebeneinander wirksamen Lage beim Verschieben des Druckkopfs 25'' während der Aufzeichnung quer zur Papierbahn 79 - entsprechend vielfach im Testbalken 70'' auftreten.

Es versteht sich, daß auch andere, an sich bekannte Druckköpfe mit punktartigen Aufzeichnungselementen für die Erfindung verwendet werden könnten und ihre einwandfreie Aktivität durch Drucken eines Testbalkens der geschilderten Art bequem kontrolliert werden kann.

**PATENTANWÄLTE**

**DIPL.-PHYS. BUSE · DIPL.-PHYS. MENTZEL · DIPL.-ING. LUDEWIG**

Unterdörnen 114 · Postfach 200210 · 5600 Wuppertal 2 · Fernruf (0202) 55 70 22/23/24 · Telex 8 591 606 wpat

5600 Wuppertal 2, den

Kennwort: "Punktchecklinie"
Fall 288"

Firma Maatschappij van Berkel's Patent N.V.
Keileweg 5, Rotterdam / Niederlande

---

A n s p r ü c h e :

1.) Vorrichtung mit Matrix-Drucker für Waren-Daten, wie Art, Menge und/oder Preis einer Ware, auf einem der Ware zugeordneten Bon, insbesondere Waage mit Bon-Ausgabe,

bestehend aus einem Druckk-opf (25) mit einer Schar von aufzeichnungsaktiven, in Abstand (36) zueinander angeordneten punktartigen Elementen (30, 30')

an denen ein den Bon (19) bildender Aufzeichnungsträger (23) schrittweise vorbeibewegbar (63) ist,

und die Elemente (30) durch eine Steuereinrichtung gegenüber dem Aufzeichnungsträger (23) selektiv aktivierbar sind, zur punktweisen Darstellung der Waren-Daten,

in Form eines maschinenlesbaren Strichcodes (50) aus streifenförmigen Aufzeichnungsspuren mit definierter Streifenbreite (53) sowie Abstandsweite (54) und gegebenenfalls in Form visuell ablesbarer
alpha-numerischer Symbole

d a d u r c h   g e k e n n z e i c h n e t ,

daß in einer außerhalb des Schriftfeldes (66) liegenden
Zone des Aufzeichnungsträgers (23, 23') sämtliche
Elemente (30, 31; 81) ansteuerbar sind zur Darstellung
eines quer zum Streifenverlauf (53) im Strichcode (50)
liegenden Testbalkens (70, 70', 70''), worin defekte Elemente (30, 31, 81) durch
eine den Testbalken (70, 70', 70'') durchquerende
leere Linie (72) erkennbar und identifizierbar sind.

2.) Vorrichtung mit einem bezüglich des Aufzeichnungsträgers ruhenden Druckknopf (25) dessen Element-Schar
(30, 31) über die verfügbare Beschriftungsbreite (76)
des Aufzeichnungsträgers (23) angeordnet ist,
d a d u r c h   g e k e n n z e i c h n e t , daß zum
Aufzeichnen des Testbalkens (70) sämtliche Elemente
(30, 31) während einer kurzen Vorschubstrecke (71)
des Aufzeichnungsträgers (23) aktivierbar sind.

3.) Vorrichtung nach Anspruch 1 oder 2, dadurch gekennzeichnet, daß während der Pausen (77) zwischen der
Aufzeichnung von Waren-Daten (50) der Testbalken (79)
aufdruckbar ist.

4.) Vorrichtung nach einem oder mehreren der Ansprüche
1 bis 3, dadurch gekennzeichnet, daß der Testbalken
(70) selbsttätig von der Vorrichtung in bestimmten zeitlichen und/oder vorschublängenmäßigen Abständen des Aufzeichnungsträgers (23) aufdruckbar ist.

5.) Vorrichtung nach einem oder mehreren der Ansprüche 1 bis 4, dadurch gekennzeichnet, daß der Testbalken (70) auf jedem, vom Aufzeichnungsträger (23) abtrennbaren, einzelnen Bon (19) aufbringbar ist.

6.) Vorrichtung nach einem oder mehreren der Ansprüche 1 bis 5, dadurch gekennzeichnet, daß der Testbalken (70) jeweils vor dem Aufzeichnen der strichcodierten, maschinenlesbaren Waren-Daten (50) aufdruckbar ist.

7.) Vorrichtung nach einem oder mehreren der Ansprüche 1 bis 6, gekennzeichnet durch einen in Zeilenverlaufsrichtung bezüglich des Aufzeichnungsträgers (23') beweglichen Druckkopfs (25'; 25'').

0116943

FIG.1

Berkel

-2/5-

FIG.2

0116943

0116943

FIG.3

FIG.4

FIG.5

Berkel

FIG.6

FIG.7

Berkel

0116943

-415-

0116943

FIG.8

FIG.9

FIG.10

FIG.11

FIG.12

Berkel